# EUROPEAN PATENT SPECIFICATION

(11) **EP 2 122 003 B1**
(45) Date of publication and mention of the grant of the patent: **16.03.2011**
(21) Application number: 07818151.8
(22) Date of filing: 14.09.2007
(51) Int. Cl.: C23C 4/08, C23C 28/00, C23C 30/00, F01D 5/28, F01D 25/00

(54) **COMPONENT WITH A SUBSTRATE AND A PROTECTIVE LAYER**
BAUTEIL MIT EINEM SUBSTRAT UND EINER SCHUTZSCHICHT
COMPOSANT COMPOSÉ D'UN SUBSTRAT ET D'UNE COUCHE PROTECTRICE

(30) Priority: 21.12.2006 EP 06026599
(43) Date of publication of application: 25.11.2009
(73) Proprietor: SIEMENS AKTIENGESELLSCHAFT, 80333 München (DE); Forschungszentrum Jülich GmbH, 52425 Jülich (DE)
(72) Inventor: STAMM, Werner, 45481 Mühlheim (DE); QUADAKKERS, Willem J., 6363 EG Wijnandsrade (NL)
(74) Representative: Paul, Dieter-Alfred
(86) International application number: PCT/EP2007/007997
(87) International publication number: WO 2008/074371

(56) References cited:
- EP-A- 1 380 672
- EP-A- 1 411 148
- EP-A2- 1 167 575
- T. MASSALSKI: "Binary Alloy Phase Diagrams" 1990, ASM INTERNATIONAL , USA , XP002458681 page 183

## Description

The invention relates to a component with a substrate and a protective layer, which consists of an intermediate NiCoCrAlY layer zone on or near the substrate and an outer layer zone arranged on the intermediate NiCoCrAlY layer zone.

Metallic compounds, which are exposed to high temperatures, must be protected against heat and corrosion. This is especially true for parts of gas turbines like combustion chambers, turbine blades or vanes. These parts are commonly coated with an intermediate MCrAlY layer (M = Fe, Co, Ni) and a thermal barrier coating (TBC) which is applied on top of the intermediate layer. Between the two layers an aluminium oxide layer is formed due to oxidation.

The bonding of the three different layers is crucial for a high durability of the protection layer as a whole. Problems may arise, if there are big differences in the thermal expansion factors of the different layers. In this case failure of the thermal barrier coating might occur, which can lead to the destruction of the whole compound.

From US-PS-6,287,644 a continuously graded MCrAlY bond coat is known which has a continuously increasing amount of Cr, Si or Zr with increasing distance from the underlaying substrate in order to reduce the thermal mismatch between the bond coat and the thermal barrier coating by adjusting the thermal expansion factors.

The US-PS-5,792,521 shows a multi layer thermal barrier coating.

US-PS-5,514,482 discloses a thermal barrier coating system for super alloy components, in which the MCrAlY layer is substituted by an aluminium coating layer such as NiAl. In order to obtain the desired properties the NiAl layer has to be quite thick because of its brittleness.

From EP 1 082 216 B1 a MCrAlY layer is known, which has the γ-phase at its outer layer. This γ-phase can only be obtained by remelting or deposition from a liquid phase in an expensive way.

EP 1 380 672 A1 discloses a highly oxidation resistant component with a protective layer, which consists of an intermediate MCrAlY layer zone and an outer layer zone, having the structure of the phase β-NiAl.

In EP 1 411 148 A1 a coated article is described which comprises an intermediate McRAlY layer and deposited thereon an outer layer of β-NiAl. The outer layer comprises (in wt%): 18-24% Al.

The layer systems mentioned above are either expensive or lack a strong bonding between the different layer zones.

It is thus an object of the present invention to describe a component having a substrate and a protective layer, which possesses a high oxidation resistance and a strong bonding between the different layer zones.

This object is met by components having an outer layer zone. in accordance with claim 1.

Surprisingly it was found that an outer layer zone of this composition is able to form an extraordinary strong bonding to the intermediate layer zone. As a result the protective layer shows a high oxidation resistance and a good durability.

According to one embodiment the outer layer zone comprises (in wt%): 19% - 21% Al, 7% - 9% Co, and Ni balance.

In one preferred embodiment the outer layer zone comprises (in wt%): 20% Al, 8% Co and Ni balance.

The outer layer zone can also comprise up to 5 wt% of Cr.

It is also possible that the outer layer zone further comprises at least one additional element selected from the group: HF, Zr, La, Ce, Y or other elements of the Lanthanide group. The maximum amount of the at least one additional element can be 1 wt%.

According to another embodiment the outer layer zone comprises 0.4 - 1.0 wt% of Y.

The outer layer zone may also comprise at least one of the elements selected from the group Si and Ta.

In one preferred embodiment the outer layer zone comprises (in wt%) less than 0.04% C, and/or less than 0.01% H, and/or 0.02% N, and/or less than 0.06% O. Most preferably the outer layer zone comprises less than 0.025% C, especially less than 0.01% C, and/or less than 0.008% H, especially less than 0.006% H, and/or less than 0.01% N, especially less than 0.005% N, and/or less than 0.04% O, especially less than 0.025% O.

The outer layer zone can have a thickness between 3 µm - 100 µm, preferably 3 µm - 50 µm.

The intermediate NiCoCrAlY layer zone can comprises 24% - 26% Co, 16% - 18% Cr, 9,5% - 11% Al, 0,3% - 0,5% Y, 1% - 1,8% Re und Ni balance.

It is also possible that the outer layer zone further comprises (in wt%): 0.1% - 2% Si and/or 0.2% - 8% Ta.

Alternatively the intermediate NiCoCrAlY layer zone may have one of the following compositions (in wt%):
11% -13% Co, 20% - 23% Cr, 10.5% - 11.5% Al, 0.3% - 0.5% Y, 1.5% - 2.5% Re and Ni balance, especially Ni-12Co-21Cr-11Al-0.4Y-2Re, or
11% - 13.5% Co, 19.5% - 23% Cr, 9% - 12% Al, 0.1% - 0.8% Y, 1% - 3.2% Re and Ni balance, especially Ni-12Co-21-Cr-11Al-0.4Y-2Re, or
9% - 11% Co, 21% - 24% Cr, 11% - 14% Al, 0.2% - 0.9% Y and Ni balance.
29% - 31% Ni, 26.5% - 29.5% Cr, 6.5% - 9.5% Al, 0.3% - 0.9% Y and 0.5% - 0.9% Si and Co balance, especially Co-30Ni-28Cr-8Al-0.6Y-0.7Si, or
27% - 29% Ni, 22.5% - 25.5% Cr, 9% - 11% Al; 0.1% - 1.1% Y and Co balance, especially Co-28Ni-24Cr-10Al-0.6Y, or

According to one preferred embodiment of the invention Y is at least partly replaced in the intermediate NiCoCrAlY layer zone by at least one element selected from the group: Si, Hf, Zr, La, Ce or other elements of the Lanthanide group.

It was found that a thickness between 50µm to 600µm and preferably between 100µm to 300µm is an optimal for the intermediate layer zone.

Preferably the outer layer zone is thinner than the intermediate layer zone.

The component according to the invention can be a part of a gas turbine like a turbine blade, a turbine vane or a heat shield. In this case an excellent protection of the turbine part against corrosion is achieved.

In the following the invention will be explained in more detail with reference to the attached drawings. In the drawings:
- Figure 1: shows a heat resistant component known from the state of the art,
- Figure 2: shows an oxidation resistant component according to the invention,
- Figure 3: shows a blade or a vane,
- Figure 4: shows a combustion chamber and
- Figure 5: shows a gas turbine.

The invention may be embodied in many different forms and should not be construed as limited to the illustrated embodiments set forth herein. Rather, the illustrated embodiments are provided so that this disclosure will be through and complete, and will fully convey the scope of the invention to those skilled in the art.

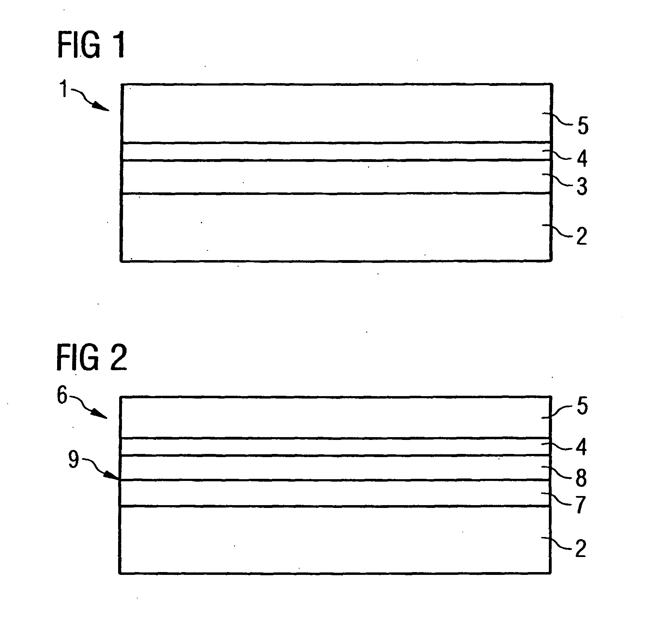

Figure 1 shows a heat resistant component 1 known in the art. It comprises a substrate 2 which is coated with a MCrAlY layer 3. A thermally grow oxide layer (TGO) 4 is provided on the MCrAlY layer 3. The oxide layer 4 is covered by an outer thermal barrier coating (TBC) 5.

Figure 2 shows an oxidation resistant component 6 according to the invention which can be a part of a gas turbine, like a turbine blade or vane or a heat shield. Component 6 comprises a substrate 2 which can consist of a metal or an alloy, e.g. a super alloy. An intermediate NiCoCrAlY layer zone 7 is provided on the substrate 2. It has a composition (in wt%) of 24% - 26% Co, 16% - 18% Cr, 9.5% - 11% Al, 0.3% - 0.5% Y, 1.0% - 1.8% Re and Ni balance. The NiCoCrAlY layer 7 may contain 0.1% - 2% Si and/or 0.2% - 8% Ta.

It is possible that the NiCoCrAlY layer zone 7 contains additional elements like Hf, Zr, La, Ce or other elements of the Lanthanide group. These elements can also replace part of the Y in the layer 7. The intermediate NiCoCrAlY layer zone 7 is approximately 200µm thick but its thickness can be in the range from 50µm to 600µm.

An outer layer zone 8 is provided on of the intermediate NiCoCrAlY layer zone 7. This outer layer zone 8 possesses the structure of the phase β-NiAl and has a composition in accordance with claim 1.

Further elements like Cr, Co, Si, Ta, Hf, Zr, La, Ce, Y and other elements of the Lanthanide group can also be included in the outer layer zone 8. Up to 5 wt% Cr can be part of the outer layer zone 8.

Preferably the outer layer zone 8 comprises (in wt%) less than 0.04% C, and/or less than 0.01% H, and/or less than 0.02% N, and/or less than 0.06% O.

The outer layer zone 8 is 15 µm thick and thus thinner than the intermediate NiCoCrAlY layer zone 7 while the thickness can be in the range of 3µm to 100 µm. Both layers 7, 8 can be applied by plasma spraying (VPS, APS) or other conventional coating methods. Together they from a protective layer 9.

The outer layer zone 8 is covered by a thermally grown oxide layer (TGO) 4, which can consist of a metastable aluminium oxide, preferably having the θ-phase or a mixture of the θ- and the γ-phase.

To improve the formation of desired metastable aluminium oxide the oxidation of the outer layer zone 8 should take place at a temperature between 850°C and 1000°C, especially between 875°C and 925°C for 2h-100h, especially between 5h and 15h. Further improvements are possible, if water vapour (0.2-50 vol%, especially 20-50 vol.%) is added to the oxidation atmosphere or if an atmosphere is used which has a low oxygen partial pressure between 800°C and 1100°C, especially between 850°C and 1050°C. In addition to water vapour the atmosphere can also contain non-oxidating gases such as a nitrogen, aragon or helium.

If the TGO 4 consists of metastable aluminium oxide it can have a needlelike structure which ensures a strong bonding between the TGO 4 and a thermal barrier coating 5 being provided on the TGO 4.

The component 6 can be part of a gas turbine for example a turbine blade, a turbine vane or a heat shield.

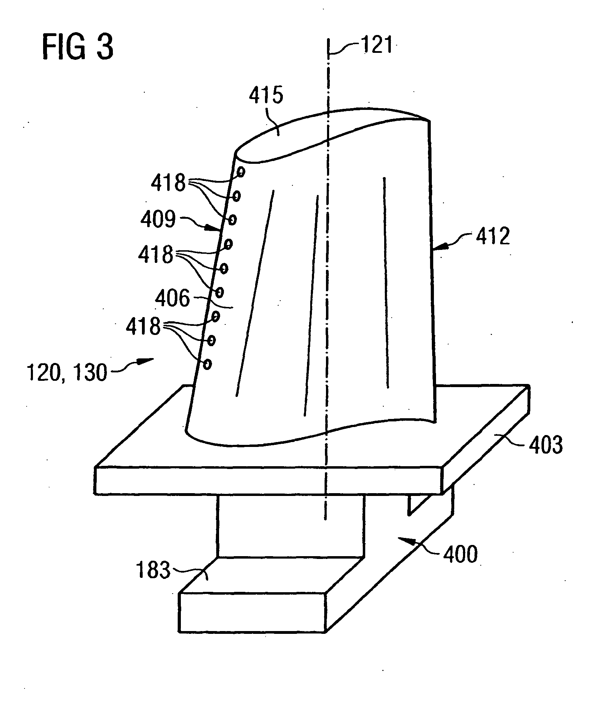

Figure 3 shows a perspective view of a blade or vane 120, 130 which extends along a longitudinal axis 121. Along the longitudinal axis 121, the blade or vane 120, 130 has, in succession, a securing region 400, an adjoining blade or vane platform 403 and a main blade region 406. A blade root 183 which is used to secure the rotor blades 120, 130 to the shaft is formed in the securing region 400. The blade or vane root 183 is designed as a hammer head. Other configurations, for example as a fir-tree root or a dovetail root, are possible. In the case of conventional blades or vanes 120, 130, solid metallic materials are used in all regions 400, 403, 406 of the rotor blade 120, 130. The rotor blade 120, 130 may in this case be produced using a casting process, a forging process, a milling process or a combination thereof.

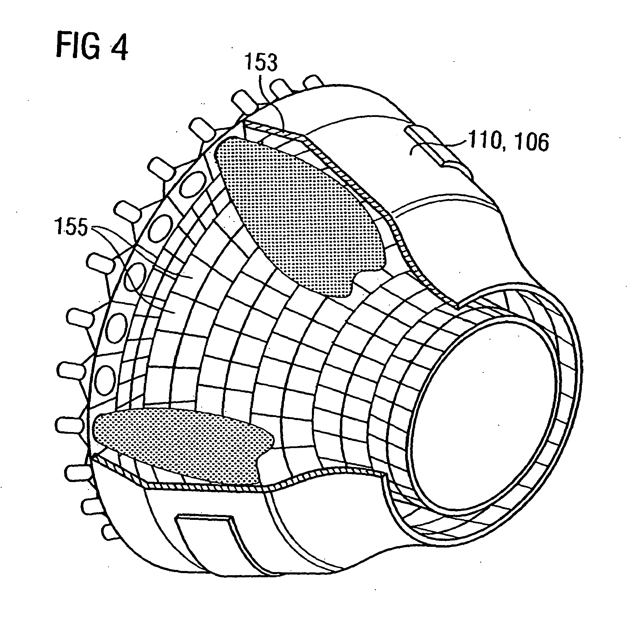

Figure 4 shows a combustion chamber 110 of a gas turbine. The combustion chamber 110 is designed, for example, as what is known as an annular combustion chamber, in which a multiplicity of burners 107 arranged around the turbine shaft in the circumferential direction open out into a common burner chamber space. For this purpose, the overall combustion chamber 110 is configured as an annular structure which is positioned around the turbine shaft.

To achieve a relatively high efficiency, the combustion chamber 110 is designed for a relatively high temperature of the working medium M of approximately 1000°C to 1600°C. To allow a relatively long service life to be achieved with these operating parameters, which are unfavourable for the materials, the combustion chamber wall 153 is provided, on its side facing the working medium M, with an inner lining formed from heat shield elements 155. On the working medium side, each heat shield element 155 is equipped with a particularly heat-resistant protective layer or is made from material which is able to withstand high temperatures. Moreover, on account of the high temperatures in the interior of the combustion chamber 110, a cooling system is provided for the heat shield elements 155 and/or their holding elements.

The materials used for the combustion chamber wall and its coatings may be similar to the turbine blades or vanes 120, 130.

The combustion chamber 110 is designed in particular to detect losses of the heat shield elements 155. For this purpose, a number of temperature sensors 158 are positioned between the combustion chamber wall 153 and the heat shield elements 155.

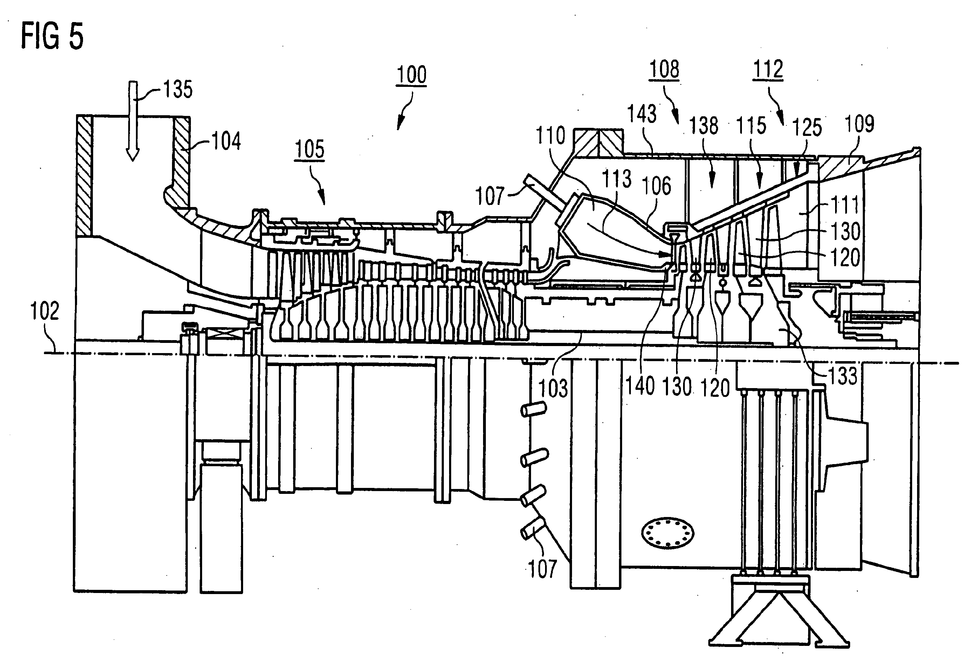

Figure 5 shows, by way of example, a gas turbine 100 in partial longitudinal section.

In the interior, the gas turbine 100 has a rotor 103 which is mounted such that it can rotate about an axis of rotation 102.

An intake housing 104, a compressor 105, a, for example torus-like combustion chamber 110, in particular an annular combustion chamber 106, having a plurality of coaxially arranged burners 107, a turbine 108 and the exhaust-gas housing 109 follow one another along the rotor 103.

The annular combustion chamber 106 is in communication with an, for example annular, hot-gas passage 111, where, for example, four turbine stages 112 connected in series form the turbine 108.
Each turbine stage 112 is formed from two rings of blades or vanes. As seen in the direction of flow of a working medium 113, a row 125 formed from rotor blades 120 follows a row 115 of guide vanes in the hot-gas passage 111.

The guide vanes 120 are in this case secured to an inner housing 138 of a stator 143, whereas the rotor blades 120 of a row 125 are arranged on the rotor 103 by way of example by means of a turbine disk 133. A generator or machine (not shown) is coupled to the rotor 103.

While the gas turbine 100 is operating, the compressor 105 sucks in air 135 through the intake housing 104 and compresses it. The compressed air provided at the turbine-side end of the compressor 105 is passed to the burners 107, where it is mixed with a fuel. The mixture is then burnt in the combustion chamber 110, forming the working medium 113.

From there, the working medium 113 flows along the hot-gas passage 111 past the guide vanes 130 and the rotor blades 120. The working medium 113 expands at the rotor blades 120, transmitting its momentum, so that the rotor blades 120 drive the rotor 130 and the latter drives the machine coupled to it.

While the gas turbine 100 is operating, the components exposed to the hot working medium 113 are subject to thermal loads. The guide vanes 130 and rotor blades 120 belonging to the first turbine stage 112, as seen in the direction of flow of the working medium 113, are subject to the highest thermal loads apart from the heat shield blocks which line the annular combustion chamber 106. To enable them to withstand the prevailing temperatures, they are cooled by means of a coolant.

The substrates may also have a directional structure, i.e. they are in single-crystal form (SX structure) or comprise only longitudinally directed grains (DS structure).

Iron-base, nickel-base or cobalt-base superalloys are used as the material.

By way of example, superalloys as known from EP 1 204 776, EP 1 306 454, EP 1 319 729, WO 99/67435 or WO 00/44949 are used; these documents form part of the present disclosure.

The blades or vanes 120, 130 may also have coatings protecting them from corrosion (MCrAlY; M is at least one element selected from the group consisting of iron (Fe), cobalt (Co), Nickel (Ni), Y represents Yttrium (Y) and/or silicon (Si) and/or at least one rare earth) and to protect against heat by means of a thermal barrier coating. The thermal barrier coating consists, for example, of ZrO₂, Y₂O₃-ZrO₂, i.e. it is not stabilized, is partially stabilized or is completely stabilized by Yttrium oxide and/or calcium oxide and/or magnesium oxide.

Columnar grains are produced in the thermal barrier coating by suitable coating processes, such as electron beam physical vapor deposition (EB-PVD).

The guide vane 130 has a guide vane root (not shown here) facing the inner housing 138 of the turbine 108 and a guide vane head on the opposite side from the guide vane root. The guide vane head faces the rotor 103 and is fixed to a securing ring 140 of the stator 143.

### List of reference signs

- (1): component
- (2): substrate
- (3): MCrAlY layer
- (4): thermally grown oxide layer
- (5): thermal barrier coating
- (6): component
- (7): intermediate NiCoCrAlY layer zone
- (8): outer layer zone
- (9): protective layer
- (100): gas turbine
- (102): axis of rotation
- (103): rotor
- (104): intuke housing
- (105): compressor
- (106): combustion chamber
- (107): burner
- (108): turbine
- (109): exhaust-gas housing
- (110): combustion chamber
- (111): hot-gas passage
- (112): turbine stage
- (113): working medium
- (115): row
- (120): blade or vane
- (121): longitudinal axis
- (125): row
- (130): blade or vane
- (133): turbine disk
- (135): air
- (138): inner housing
- (140): securing ring
- (143): stator
- (153): chamber wall
- (155): heat shield elements
- (158): temperature sensors
- (183): blade root
- (400): securing regions
- (403): adjoining blade or vane platform
- (406): main blade region

## Claims

1. Component (6), preferably a part of a gas turbine (100), and in particular a turbine blade (120, 139), a turbine vane (120, 130) or a heat shield (155) with a substrate (2) and a protective layer (9), which consists of an intermediate NiCoCrAlY layer zone (7) on or near the substrate (2) and an outer layer zone (8) arranged on the intermediate NiCoCrAlY layer zone (7), wherein the outer layer zone (8) possesses the structure of the phase β-NiAl and comprises (in wt%):
6 - 11% Co
17% - 23% Al
and optionally
up to 5 wt% Cr,
at least one additional element selected from the group consisting of Hf, Zr, La, Ce, Y and other elements of the Lanthanide group in a maximum amount of 1 wt%,
at least one of the elements selected from the group 0.1-2% Si and 0.2-8% Ta. and Ni balance.

2. Component (6) according to claim 1, wherein the outer layer zone (8) comprises (in wt%):
19% - 21% Al
7% - 9% Co,
and Ni balance,
in particular
20% Al,
8% Co,
and Ni balance.

3. Component (6) according to claim 1 or 2, wherein the outer layer zone (8), in particular comprises (in wt%) 0.4% - 1.0% Y.

4. Component (6) according to any of the preceding claims, wherein the outer layer zone (8) comprises (in wt%) :
less than 0.04% C, and/or
less than 0.01% H, and/or
less than 0.02% N, and/or
less than 0.06% O.

5. Component (6) according to any of the preceding claims, wherein the outer layer zone (8) comprises (in wt%) :
less than 0.025% C,
especially less than 0.01% C, and/or
less than 0.008% H,
especially less than 0.006% H, and/or
less than 0.01% N,
especially less than 0.005% N, and/or
less than 0.04% O,
especially less than 0.025% O.

6. Component (6) according to any of the preceding claims, wherein the outer layer zone (8) has a thickness between 3 µm to 100 µm, preferably between 3 µm to 50 µm.

7. Component (6) according to any of the preceding claims, wherein the intermediate NiCoCrAlY layer zone (7) comprises (in wt%):
24% - 26% Co,
16% - 18% Cr,
9.5% - 11% Al,
1.0% - 1.8% Re
0.3% - 0.5 Y,
and Ni balance.
wherein in particular the intermediate NiCoCrAlY layer zone (7) further comprises (in wt%): 0.1% - 2% Si and/or 0.2% - 8% Ta.

8. Component (6) according to any of the claims 1 to 6, wherein the intermediate NiCoCrAlY layer zone (7) comprises (in wt%) :
11% - 13% Co,
20% - 23% Cr,
10.5% - 11.5% Al,
1.5% - 2.5% Re
0.3% - 0.5 Y,
and Ni balance,
especially 12% Co, 21% Cr, 11% Al, 2% Re, 0.4% Y and Ni balance,
or wherein the intermediate NiCoCrAlY layer zone (7) comprises (in wt%):
11% - 13.5% Co,
19.5% - 23% Cr,
9% - 12% Al,
1% - 3,2% Re
0.1% - 0.8 Y,
and Ni balance,
especially 12% Co, 21% Cr, 11% Al, 2% Re, 0.4% Y and Ni balance, or
wherein the intermediate NiCoCrAlY layer zone (7) comprises (in wt%):
9% - 11% Co,
21% - 24% Cr,
11 % - 14% Al,
0.2% - 0.9 Y,
and Ni balance,
or wherein the intermediate NiCoCrAlY layer zone (7) comprises (in wt%);
29% - 31% Ni,
26.5% - 29.5% Cr,
6.5% - 9.5% Al,
0.3% - 0.9 Y,
0.5% - 0.9 Si
and Co balance,
especially 30% Ni, 28% Cr, 8% Al, 0.6% Y, 0.7% Si and Co balance,
or wherein the intermediate NiCoCrAlY layer zone (7) comprises (in wt%):
27% - 29% Ni,
22.5% - 25.5% Cr,
9% - 11% Al,
0.1% - 1.1 Y,
and Co balance,
especially 28% Ni, 24% Cr, 10% Al, 0.6 Y and Co balance.

9. Component (6) according any of the claims 7 to 8, wherein in the intermediate NiCoCrAlY layer zone (7) Y is at least partly replaced by at least one element selected from the group consisting of Si, Hf, Zr, La, Ce and other elements of the Lanthanide group.

10. Component (6) according to any of the preceding claims, wherein the intermediate NiCoCrAlY layer zone (7) has a thickness of 50 µm to 600 µm, preferably 100 µm to 300 µm.

11. Component (6) according to any of the preceding claims, wherein the outer layer zone (8) is thinner than the intermediate NiCoCrAlY layer zone (7).

## Patentansprüche

1. Bauteil (6), vorzugsweise Teil einer Gasturbine (100), und insbesondere ein Turbinenblatt (120, 139), eine Turbinenschaufel (120, 130) oder ein Hitzeschild (155) mit einem Substrat (2) und einer Schutzschicht (9), die eine NiCoCrAlY-Zwischenschichtzone (7) auf oder in der Nähe des Substrates (2) und eine äußere Schichtzone (8) angeordnet auf der NiCoCrAlY-Zwischenschichtzone (7) umfasst, wobei die äußere Schichtzone (8) die Struktur von β-Phase-NiAl aufweist und enthält (in Gew.-%):
6% bis 11% Co,
17% bis 23% Al,
und optional
bis zu 5 Gew.-% Cr,
mindestens ein zusätzliches Element ausgewählt aus der Gruppe bestehend aus Hf, Zr, La, Ce, Y und anderen Elementen aus der Lanthaniden-Gruppe in einer Menge vom maximal 1 Gew.-%,
mindestens eines der Elemente ausgewählt aus der Gruppe 0, 1% bis 2% Si und 0,2% bis 8% Ta,
und den Rest Ni.

2. Bauteil (6) nach Anspruch 1, wobei die äußere Schichtzone (8) enthält (in Gew.-%):
19% bis 21% Al,
7% bis 9% Co,
und den Rest Ni,
insbesondere
20% Al,
8% Co,
und Den Rest Ni.

3. Bauteil (6) nach Anspruch 1 oder 2, wobei die äußere Schichtzone (8) insbesondere (in Gew.-%) 0,4% bis 1,0% Y enthält.

4. Bauteil (6) nach einem der vorhergehenden Ansprüche, wobei die äußere Schichtzone (8) enthält (in Gew.-%):
Weniger als 0,04% C, und/oder
weniger als 0,01% H, und/oder
weniger als 0,02% N, und/oder
weniger als 0,06% O.

5. Bauteil (6) nach einem der vorhergehenden Ansprüche, wobei die äußere Schichtzone (8) enthält (in Gew.-%):
Weniger als 0,025% C,
insbesondere weniger als 0,01% C, und/oder weniger als 0,008% H,
insbesondere weniger als 0,006% H, und/oder weniger als 0,01% N,
insbesondere weniger als 0,005% N, und/oder weniger als 0,04% O,
insbesondere weniger als 0,025% O.

6. Bauteil (6) nach einem der vorhergehenden Ansprüche, wobei die äußere Schichtzone (8) eine Dicke zwischen 3 µm und 100 µm, vorzugsweise zwischen 3 µm und 50 µm aufweist.

7. Bauteil (6) nach einem der vorhergehenden Ansprüche, wobei die Zwischenschichtzone NiCoCrAlY (7) enthält (in Gew.-%):
24% bis 26% Co,
16% bis 18% Cr,
9,5% bis 11% Al,
1,0% bis 1,8% Re,
0,3% bis 0,5% Y,
und den Rest Ni,
wobei insbesondere die NiCoCrAlY-Zwischenschichtzone (7) weiterhin enthält (in Gew.-%): 0,1% bis 2% Si und/oder 0,2% bis 8% Ta.

8. Bauteil (6) nach einem der Ansprüche 1 bis 6, wobei die NiCoCrAlY-Zwischenschichtzone (7) enthält (in Gew.-%):
11% bis 13% Co,
20% bis 23% Cr,
10,5% bis 11,5% Al,
1,5% bis 2,5% Re,
0,3% bis 0,5% Y,
und den Rest Ni,
insbesondere 12% Co, 21% Cr, 11% Al, 2% Re, 0,4% Y und den Rest Ni,
oder wobei die NiCoCrAlY-Zwischenschichtzone (7) enthält (in Gew.-%):
11% bis 13,5% Co,
19,5% bis 23% Cr,
9% bis 12% Al,
1% bis 3,2% Re,
0,01% bis 0,8% Y,
und den Rest Ni,
insbesondere 12% Co, 21% Cr, 11% Al, 2% Re, 0,4% Y und den Rest Ni, oder
wobei die NiCoCrAlY-Zwischenschichtzone (7) enthält (in Gew.-%):
9% bis 11% Co,
21% bis 24% Cr,
11% bis 14% Al,
0,2% bis 0,9% Y,
und den Rest Ni,
oder wobei die NiCoCrAlY-Zwischenschichtzone (7) enthält (in Gew.-%):
29% bis 31% Ni,
26,5% bis 29,5% Cr,
6,5% bis 9,5% Al,
0,3% bis 0,9% Y,
0,5% bis 0,9% Si,
und den Rest Co,
insbesondere 30% Ni, 28% Cr, 8% Al, 0,6% Y, 0,7% Si und den Rest Co,
oder wobei die NiCoCrAlY-Zwischenschichtzone (7) enthält (in Gew.-%):
27% bis 29% Ni,
22,5% bis 25,5% Cr,
9% bis 11% Al,
0,1% bis 1,1% Y,
und den Rest Co,
insbesondere 28% Ni, 24% Cr, 10% Al, 0,6% Y und den Rest Co.

9. Bauteil (6) nach einem der Ansprüche 7 oder 8, wobei in der NiCoCrAlY-Zwischenschichtzone (7) Y wenigstens teilweise ersetzt ist durch wenigstens ein Element ausgewählt aus der Gruppe bestehend aus Si, Hf, Zr, La, Ce und anderen Elementen aus der Lanthaniden-Gruppe.

10. Bauteil (6) nach einem der vorhergehenden Ansprüche, wobei die NiCoCrAlY-Zwischenschichtzone (7) eine Dicke von 50 µm bis 600 µm, vorzugsweise von 100 µm bis 300 µm aufweist.

11. Bauteil (6) nach einem der vorhergehenden Ansprüche, wobei die äußere Schichtzone (8) dünner ist als die NiCoCrAlY-Zwischenschichtzone (7).

## Revendications

1. Composant (6), préférablement une partie d'une turbine de gaz (100), et particulièrement d'une aube de turbine (120, 139), une pale de turbine (120, 130) ou un écran thermique (155) avec un substrat (2) et une couche protectrice (9), qui est formée d'une zone de couche intermédiaire NiCoCrAlY (7) sur ou près du substrat (2) et une zone de couche extérieure (8) arrangée sur la zone de couche intermédiaire NiCoCrAlY (7), où la zone de couche extérieure (8) a la structure de la phase β-NiAl et comprend (en % en poids):
6-11% Co
17%-23% Al
et optionnellement
jusqu'à 5% en poids Cr,
au moins un élément additionnel sélecté du groupe formé de Hf, Zr, La, Ce, Y et d'autres éléments du groupe Lanthanide dans une quantité maximum de 1% en poids, au moins l'un d'entre les éléments sélectés du groupe Si 0,1-2% et Ta 0,2-8% et le reste Ni

2. Composant (6) selon la revendication 1, où la zone de couche extérieure (8) comprend (en % en poids):
19%-21% Al
7% -9% Co,
et le reste Ni,
particulièrement
20% Al
8% Co,
et le reste Ni.

3. Composant (6) selon la revendication 1 ou 2, où la zone de couche extérieure (8) comprend particulièrement (en % en poids) 0,4%-1,0% Y.

4. Composant (6) selon l'une quelconque des revendications antérieures, où la zone de couche extérieure (8) comprend (en % en poids):
moins que 0,04% C, et/ou
moins que 0,01% H, et/ou
moins que 0,02% N, et/ou
moins que 0,06% O.

5. Composant (6) selon l'une quelconque des revendications antérieures, où la zone de couche extérieure (8) comprend (en % en poids):
moins que 0,025% C,
spécialement moins que 0,01% C, et/ou
moins que 0,008% H,
spécialement moins que 0,006% H, et/ou moins que 0,01% N,
spécialement moins que 0,005% N, et/ou moins que 0,04% O,
spécialement moins que 0,025% O.

6. Composant (6) selon l'une quelconque des revendications antérieures, où la zone de couche extérieure (8) a une épaisseur entre 3 µm et 100 µm, préférablement entre 3 µm et 50 µm.

7. Composant (6) selon l'une quelconque des revendications antérieures, où la zone de couche intermédiaire NiCoCrAlY (7) comprend (en % en poids):
24%-26% Co,
16%-18% Cr,
9,5%-11% Al,
1,0%-1,8% Re,
0,3%-0,5 Y,
et le reste Ni.
où particulièrement la zone de couche intermédiaire NiCOCrAlY (7) comprend de plus (en% en poids): 0,1%-2% Si et/ou 0,2%-8% Ta.

8. Composant (6) selon l'une quelconque des revendications 1 à 6, où la zone de couche intermédiaire NiCOCrAlY (7) comprend (en % en poids):
11%-13% Co,
20%-23% Cr,
10,5%-11,5% Al,
1,5%-2,5% Re,
0,3%-0,5 Y,
et le reste Ni.
spécialement 12% Co, 21% Cr, 11% Al, 2% Re, 0,4% Y et le reste Ni,
ou où la zone de couche intermédiaire NiCoCrAlY (7) comprend (en % en poids) :
11%-13,5% Co,
19,5%-23% Cr,
9%-12% Al,
1%-3,2% Re,
0,1%-0,8 Y,
et le reste Ni.
spécialement 12% Co, 21% Cr, 11% Al, 2% Re, 0,4% Y et le reste Ni, ou la zone de couche intermédiaire NiCoCrAlY (7) comprend (en % en poids):
9%-11% Co,
21%-24% Cr,
11%-14% Al,
0,2%-0,9 Y,
et le reste Ni,
ou où la zone de couche intermédiaire NiCoCrAlY (7) comprend (en % en poids) :
29%-31% Ni,
26,5%-29,5% Cr,
6,5%-9,5% Al,
0,3%-0,9% Y,
0,5%-0,9% Si,
et le reste Co,
spécialement 30% Ni, 28% Cr, 8% Al, 0,6% Y, 0,7% Si et le reste Co, où la zone de couche intermédiaire NiCOCrAlY (7) comprend (en % en poids):
27%-29% Ni,
22,5%-25,5% Cr,
9%-11% Al,
0,1%-1,1% Y,
et le reste Co.
spécialement 28% Ni, 24% Cr, 10% Al, 0,6% Y, et le reste Co.

9. Composant (6) selon l'une quelconque des revendications 7 à 8, où dans la zone de couche intermédiaire NiCoCrAlY (7) Y est au moins partiellement remplacé par au moins un élément sélecté du groupe formé de Si, Hf, Zr, La, Ce ou d'autres éléments du groupe Lanthanide.

10. Composant (6) selon l'une quelconque des revendications antérieures, où la zone de couche intermédiaire NiCoCrAlY (7) a une épaisseur de 50 µm à 600 µm, préférablement 100 µm à 300 µm.

11. Composant (6) selon l'une quelconque des revendications antérieures, où la zone de couche extérieure (8) est plus mince que la zone de couche intermédiaire NiCoCrAlY (7).
